(19) Europäisches Patentamt
European Patent Office
Office européen des brevets

(11) **EP 2 602 752 A1**

(12) **EUROPEAN PATENT APPLICATION**

(43) Date of publication:
**12.06.2013 Bulletin 2013/24**

(51) Int Cl.:
***G06Q 10/04*** (2012.01)

(21) Application number: **11192890.9**

(22) Date of filing: **09.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ATS Group (IP Holdings) Limited Road Town, Tortola (VG)**

(72) Inventors:
• **Huber, Marco**
  **64295 Darmstadt (DE)**

• **Sasloglou, Konstantinos**
  **64295 Darmstadt (DE)**
• **Zeiger, Florian**
  **64295 Darmstadt (DE)**

(74) Representative: **Bittner, Peter et al**
**Peter Bittner und Partner**
**Seegarten 24**
**69190 Walldorf (DE)**

Remarks:
Amended claims in accordance with Rule 137(2) EPC.

(54) **Method and system for sensor calibration support**

(57)     A computer implemented method, computer program product and computer system for sensor calibration support. The computer system receives measurement data from at least one sensor node out of a plurality of sensor nodes. The measurement data is validated against an associated sensor state model and a global model, wherein the global model has knowledge about spatio-temporal phenomena observed by the plurality of sensor nodes and wherein the associated sensor state model is associated with the at least one sensor node and the associated sensor state model is based on at least one sensor parameter of the associated at least one sensor node. A de-calibration of the at least one sensor node is detected based on the measurement data validation and a local model is retrieved from the global model for the at least one de-calibrated sensor node, wherein the local model is a spatio-temporal snapshot of the global model. At least one sensor parameter of the at least one de-calibrated sensor node is optimized by comparing the at least one de-calibrated sensor node to at least one calibrated neighboring sensor node from the local model and the at least one optimized sensor parameter is provided to update the at least one sensor state model associated with the at least one de-calibrated sensor node.

FIG. 2

**Description**

**Technical Field**

The present invention generally relates to electronic data processing, and more particularly, relates to methods, computer program products and systems to support sensor calibration.

**Background**

Spatially distributed sensor networks typically include a large number of sensor nodes which provide measurement capabilities for spatio-temporal phenomena in their vicinity. An example of such a spatio-temporal phenomenon is a gas distribution in a specific region. A sensor network may for instance include sensors being capable to measure the carbon dioxide concentration at various locations in a region of interest. Due to technical, physical, and chemical properties, the measurement accuracy of each sensor will degrade and may require recalibration from time to time.

Current approaches treat calibration in sensor networks as parameter estimation problem. These approaches are typically designed for observing point mass objects, such as vehicles or persons. However, spatially distributed phenomena are difficult to handle from a computational point of view. Discretization in the spatial domain is required, which introduces discretization/quantization errors and discards information between discretization points, which is a drawback because the locations of sensor nodes and non-discretization points are not identical. Further it is assumed that there is prior knowledge about the identity of de-calibrated nodes, which is often not the case. Alternatively, calibration may be performed continuously at regular time intervals, even when actually not necessary, which is a waste of computational resources and energy. Many existing approaches further assume that so-called anchor nodes exist which are known by all other sensor nodes, wherein an anchor node is a sensor node being calibrated all the time. Other calibration approaches for spatio-temporal phenomena average sensor data provided by neighbouring sensor nodes, whereas a dense neighbourhood is assumed with sufficient anchor nodes.

**Summary**

There is therefore a need to improve the calibration of sensors which are used in the context of spatio-temporal phenomena because sensors de-calibrate over time due to conditions in the environment affecting the measurement process of the sensor (e.g., measurement process might be affected by changing temperature or direct sun exposure).

This is achieved by embodiments of the invention according to the independent claims by supporting re-calibration of sensor nodes in order to get sufficiently accurate estimates of the phenomena observed by the sensor nodes.

In one embodiment a computer system receives measurement data from at least one sensor node out of a plurality of sensor nodes through an appropriate interface component. The sensor nodes are communicatively coupled with the computer system. For example, the sensor nodes may form one or more sensor networks and may communicate with the computer system through a gateway node of the sensor network. Direct communication of each sensor with the computer system is also possible.

The received measurement data is the raw data as measured and provided by the respective sensor node. The computer system may correct the received measurement data from the at least one sensor node by using an associated sensor state model which is associated with the at least one sensor node. The associated sensor state model can be based on at least one sensor parameter of the associated at least one sensor node. For example, the sensor state model may describe the drift behavior of a certain sensor parameter over time. The computer system may store a sensor state model for each sensor node by associating the sensor state models with the respective sensor node IDs (e.g., sensor identification numbers). The sensor state models may also be stored by the respective sensor nodes and be submitted to the interface component of the computer system.

In an alternative embodiment the associated sensor state model may be located at the respective sensor node itself and the correction can be performed directly at the sensor node. That is, the sensor node then transmits already corrected measurement data to the computer system. In other words, in this alternative embodiment the computer system receives corrected measurement data instead of raw data from the sensors.

The computer system may have a detection component configured to detect a de-calibration of the at least one sensor node by using information from a global model, the at least one sensor state model being associated with the at least one sensor node and the measurement data received from the at least one sensor node. This may include the validation of the corrected measurement data against the associated sensor state model and against the global model. The global model has knowledge about spatio-temporal phenomena observed by the plurality of sensor nodes. The global model can further include information about external factors like global barometric pressure, global temperature, global wind direction, global humidity or other external factors which may influence measurement data of sensor nodes. In other words, once the raw data is corrected by using the respective sensor state model (e.g., correcting the sensor drift), the corrected data is compared with the global model, which provides an expected value range for the corrected measurement data. If the measurement data does not fall into the expected value range it may still be due to an ad-hoc change in the environment of the at least one sensor node. Optionally, this can be validated, for example, by querying neighboring nodes of the at least one sensor for their current measurement data.

Optionally, in case the detection component comes to the conclusion that the at least one sensor node is well calibrated and provides meaningful measurement data it may forward the measurement data to the global model for updating the global model.

If the detection component finally comes to the conclusion that the at least one sensor is de-calibrated it invokes a retrieval component to retrieve a local model for the at least one de-calibrated sensor node from the global model. The local model includes a spatio-temporal snapshot of the spatio-temporal phenomena described in the global model. Spatially, it covers an area containing the de-calibrated node and its neighbours. That is, the local model includes the up-to-date data of the global model for a region in the neighborhood of the at least one sensor node. The use of a local model enables calibration to be performed independently of processing the measurement data from remaining sensor nodes of the sensor network. Furthermore, it reduces the computational load for calibration since not the complete global model needs to be considered.

As the computer system is able to detect de-calibrated nodes it allows performing sensor calibration only when necessary and avoids continuous re-calibration.

Specific embodiments of the detection method support reducing both, misdetections and false alarms. A misdetection is defined as a false negative when the system fails to detect a de-calibrated node. A false alarm is defined as a false positive, when a sensor node is not de-calibrated but reported to be. This may be implemented through a combination of various checking procedures. For example, validating against the sensor state model, which provides an estimate of the sensor measurement parameters (e.g., about the drift, and providing for example results of self-tests), may be combined with validating against the global model, which includes a description of the spatio-temporal phenomena and provides estimates including uncertainty information of the observed phenomena. The global model can further provide information about space/time as well as measurement type correlation of measurement data for different phenomena.

A calibration component can then optimize at least one sensor parameter of the at least one de-calibrated sensor by comparing the at least one de-calibrated sensor node to at least one calibrated neighboring sensor node from the local model. Comparing in this context may be understood as relating the de-calibrated sensor node to its neighboring nodes. This is explained in more detail later in the description. Of course, comparing to more than one calibrated neighboring sensor can improve the calibration. The local model thereby facilitates that the de-calibrated sensor mimics its neighbouring nodes. That is, for calibration purposes the at least one de-calibrated sensor node is virtually placed at the locations of its neighbours and the measurement data of its neighbours is used for adapting the sensor parameters of the de-calibrated sensor node. The current measurement data of the neighbouring calibrated sensor nodes may either be already included in the local model or the retrieval component can query the calibrated sensors for sending current data through the interface component. The at least one optimized sensor parameter is then provided to update the at least one sensor state model associated with the at least one de-calibrated sensor node.

The proposed approach uses correlation information between observed phenomena types of the global model for the validation of measured data values. If a calibration need is detected, a combination of the local model and data from neighbouring network nodes is used with an optimization procedure to determine corrected sensor calibration parameters.

Embodiments of the invention provide dynamic on-line and "in situ" calibration for a network of spatially distributed sensor nodes. Therefore, data of neighbouring sensor nodes are used in combination with the global model and a local model of the spatio-temporal phenomena as well as a sensor state model in order to recalibrate a sensor and for reducing the number of false positive and false negative measurements. The proposed mechanism requires neither anchor nodes nor a dense neighbourhood.

Since spatio-temporal phenomena vary over space, each sensor node typically measures different values of the phenomena. The local model provides an estimate of the spatio-temporal phenomena at arbitrary sensor locations and further provides correlation information between different phenomena types. This estimate may also include information about the certainty or reliability of this estimate, for example, in terms of a probability distribution or confidence intervals. Because the local model provides a priori information in form of an estimate of the spatio-temporal phenomena, calibration can be performed even in a sparse neighbourhood of sensor nodes. As the local model may provide uncertainty information together with the estimates, anchor nodes are not necessarily required. In other words, the uncertainty information of the local model can tell how reliable the respective measurement data of neighbouring sensor nodes are and, therefore, there is no need for anchor nodes being calibrated all the time. If anchor nodes are available, they can be incorporated and help to further improve the calibration and the estimation of spatio-temporal phenomena. Because the local model allows accounting for the spatial variation of the phenomena, there is no need to make an assumption that neighbouring nodes provide similar measurement values. The adaptation of the sensor parameters can be regarded as a procedure for solving an optimization problem minimizing the deviation between the expected measurements of the de-calibrated node at the locations of the neighbouring nodes and the actual measurements of neighbouring nodes.

Further embodiments and advantages of the invention are described by the independent claims.

**Brief Description of the Drawings**

FIG. 1 is a simplified computer system according to one embodiment of the invention interacting with sensor networks;
FIG. 2 is a simplified flow chart of a computer implemented method according to one embodiment of the invention;
FIG. 3 illustrates an example of a global model;
FIG. 4 illustrates an example of a sensor state model;
FIG. 5 shows alternative embodiments for validating measurement data;
FIG. 6 shows one embodiment of a calibration component; and
FIG. 7 shows a specific example of parameter optimization for de-calibrated sensor node.

**Detailed Description**

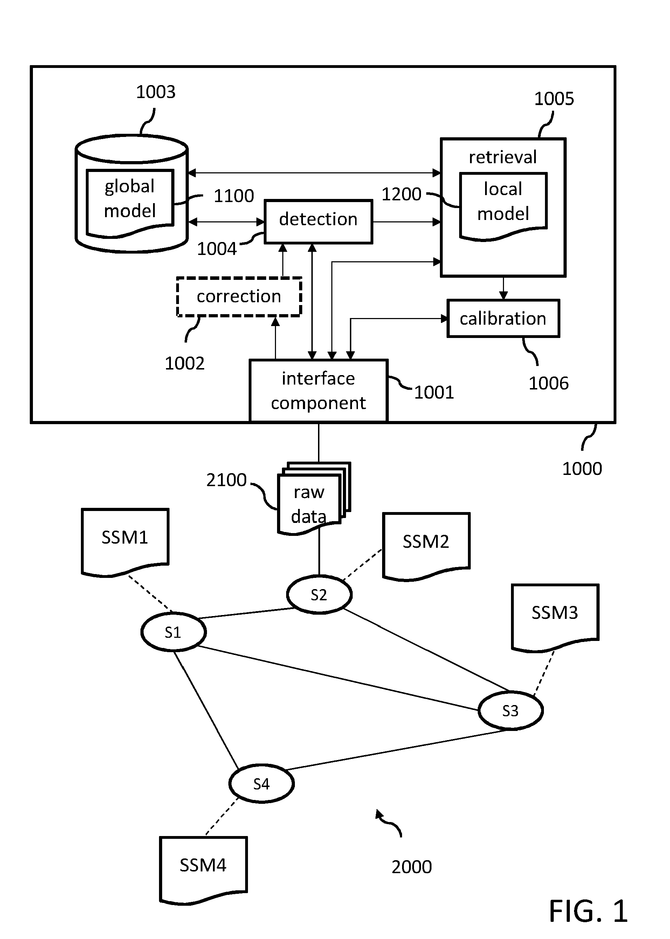

FIG. 1 is a simplified computer system 1000 according to one embodiment of the invention interacting with a sensor network 2000. The computer system 1000 has an interface component 1001 for receiving measurement data 2100 from a plurality of sensor nodes S1, S2, S3, S4. A sensor node is a hardware device, which includes at least one measurement unit for measuring a specific phenomenon. The measurement data may be the raw data measured by a respective sensor node. The sensor nodes S1, S2, S3, and S4 may form one or more sensor networks 2000. In the example, the sensor network 2000 has a gateway node which is communicatively coupled with the interface component 1001. All sensor nodes of a sensor network may communicate with the computer system 1000 through the gateway node S2 along their network connections. Alternatively, sensor nodes can communicate directly with the interface component 1001. In that sense, sensor nodes are often referred to as sensors. In the context of networks the sensors can be considers as "nodes". In the easiest case, there are many sensors that communicate data to the computer system. For the data transmission they might use structures of a network

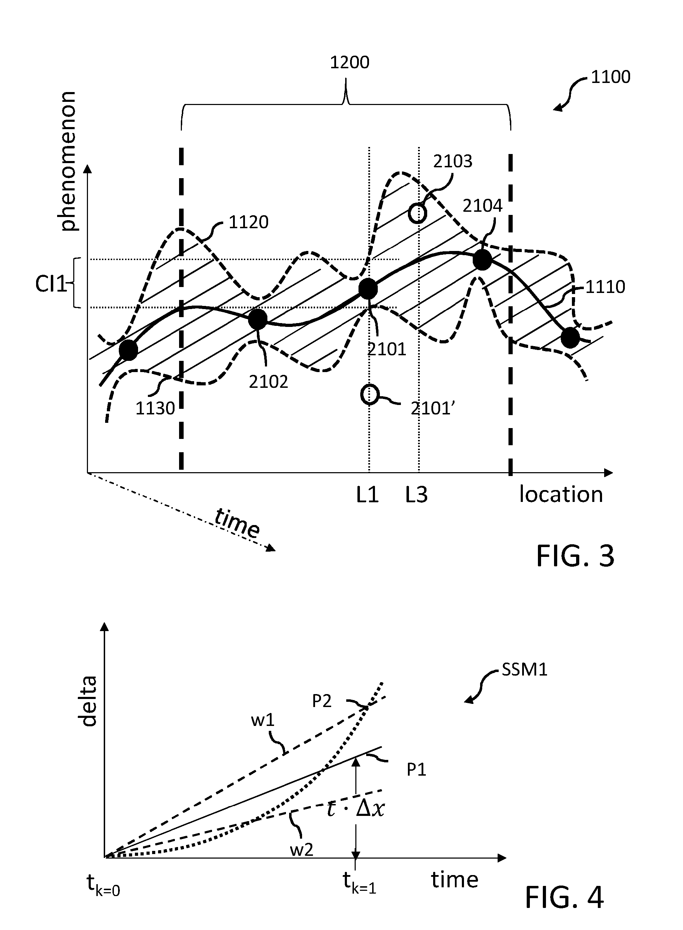

Each sensor node S1, S2, S3, S4 can be associated (illustrated by dashed lines) with a corresponding sensor state model SSM1, SSM2, SSM3, SSM4, respectively. The term "state" in this context refers to the current status of sensor parameters, which may change with the time, for example, due to drift. In other words, a sensor state model describes the temporal evolution of a sensor parameter. The difference between a real value of a phenomenon and the output of a sensor node measuring this phenomenon is often referred to as offset. This offset may not only a static value, but may change over time. The sensor state models can be stored on the respective sensor nodes or they can be maintained by the system 1000. In case that the computer system 1000 has the sensor state models they may be associated with the corresponding sensor for example by a respective sensor identifier (e.g., sensor ID). As mentioned before, a sensor node may also be a multi-sensor system with different sensing capabilities. Such a multi-sensor system may have corresponding different sensor state models for each respective sensing capability (e.g., carbon-dioxide, ozone and particulate matter). That is, a multi-sensor system may have multiple embedded physical sensors in a single sensor node, which may be associated with multiple sensor state models. In some embodiments, a single physical sensor may already have multiple sensing capabilities (e.g., carbon dioxide and ozone). For the reason of simplicity in the following description we will assume that each sensor node has one physical sensor. Cases with multiple physical sensors in one sensor node are explicitly discussed with regards, to correlations between the physical sensors. A detailed example of a sensor state model is discussed under FIG. 4.

The computer system 1000 further is storing a global model 1100 having knowledge about spatio-temporal phenomena observed by the plurality of sensor nodes S1, S2, S3, S4. The global model can be stored in a storage component 1003, which is based on any conventional storage technology as described later on. The global model 1100 is described in detail under FIG. 3. In short, the global model uses measurement data from the sensor nodes and provides a continuous description of phenomena by interpolation of the measurement data and calculation of reliability/uncertainty information, e.g., by means of a probability distribution or confidence , which are associated with the interpolation of each data point of the global model. Although the global model is depicted as part of the storage component, a person skilled in the art will appreciate in view of the detailed description that the global model includes both, a storage capability of the corrected measurement data and at least one algorithm that can performs estimation or interpolation on the corrected measurement data.

In one embodiment the computer system 1000 has a correction component 1002, which is configured to correct the measurement data 2100 received from the plurality of sensor nodes S1, S2, S3, S4 by using associated sensor state models SSM1, SSM2, SSM3, SSM4. That is, for example, received raw data from the sensor nodes are first corrected with regards to the drift or scaling of the respective sensor node's sensor state model (cf. FIG. 4). The corrected measurement data is assumed to correspond to the measurement raw data of the calibrated sensor nodes. In the alternative embodiment where the computer system already receives corrected measurement data from the sensor nodes, the correction component is part of the sensor nodes and not necessarily a component of the computer system anymore. Therefore, the correction component is shown with a dashed frame illustrating the optional character of the correction component as an integral part of the computer system 1000.

The corrected measurement data is then fed into a detection component 1004, which is configured to detect a de-calibration of a sensor node S1 by using information from the global model 1100, the at least one sensor state model SSM1 which is associated with the sensor node S1 and the corrected measurement data corresponding to the measurement data received from the sensor node S1. Thereby, the associated sensor state model SSM1 provides additional information with regards to the reliability of the corrected measurement data. Typically the correction of the measurement data becomes less reliable over time. That is, the longer the time elapsed since the last calibration of the respective sensor node S1, the less reliable the correction will be. The detection component 1004 can also take into account probabilistic assumptions as described in more detail under FIG. 4.

The information of the global model 1100 is also used by the detection component 1004 to assess the de-calibration of the sensor node S1. The global model 1100 includes uncertainty information which indicates the reliability of the model at each location/time. Details are described under FIG. 3. For example, if the global model has a certain confidence interval for the phenomenon measured by the sensor node S1 at the location of the sensor node, and if the confidence interval indicates a sufficiently high reliability of the global model at the respective location, and if the corrected measurement data from the sensor node S1 is inside the respective confidence threshold values of the global model, then this may lead to the conclusion that the respective sensor node is well calibrated. For example, if the global model has a certain confidence interval for the phenomenon measured by the sensor node S1 at the location of the sensor node, and if the corrected measurement data from the sensor node S1 is outside the respective confidence interval of the global model, then a de-calibration of the sensor node may be detected. If the confidence interval of the global model for the phenomenon measured by the sensor node S1 at the location of the sensor node is large, that is, the global model is not reliable enough at this location but the corrected measurement data is still within the respective confidence interval of the global model, the detection component may decide to check the received measurement data of sensor node S1 by querying neighboring sensor nodes S2, S4 through the interface component 1001. That is, the detection component can ask one or more neighboring sensor nodes to provide their measurement data for the same phenomenon and compare the received measurement data after correction to the corrected measurement data of sensor node S1. In this embodiment the detection component may recognize that the measurement data received from S1 make sense because the neighboring sensor nodes confirm the data and are still considered to be calibrated.

In such case the detection component may decide that the sensor node S1 is still well calibrated. As a consequence the detection component may forward the corrected measurement data from sensor node S1 to the global model 1100 for updating the global model 1100. The updating of the global model 1100 over time with measurement data from calibrated sensor nodes improves the quality of the global model over time by decreasing the uncertainty information, e.g., the width of the confidence interval. That is, the global model 1100 becomes more reliable over time which again improves the quality of the detection results.

In such cases, where the detection component 1004 detects a de-calibration of a sensor node it can invoke a retrieval component 1005 of the computer system 1000 to retrieve a local model 1200 for the de-calibrated sensor node S1. The local model 1200 is a spatio-temporal snapshot of the global model 1100. The local model 1200 includes a spatial prediction capability of the global model for the given phenomenon at the location of the de-calibrated sensor node S1 and in its neighborhood (cf. FIG.3). The spatial prediction capability is based on respective interpolation algorithms applied to the corrected measurement data. The local model 1200 does not need to be persistently stored in the computer system 1000. It can be discarded once it is not needed any more for the re-calibration of a respective sensor node. Further, the retrieval component can determine well calibrated sensor nodes in the neighborhood of the de-calibrated sensor. It may further query the calibrated sensor nodes S2, S4 for providing current measurement data for the respective phenomenon.

The local model can then be used by a calibration component 1006 of the computer system 1000 to optimize a respective sensor parameter (e.g., P1, cf. FIG. 4) of the de-calibrated sensor node S1 by using data from available calibrated sensor nodes S2, S4 in the neighborhood that measure the same phenomenon type. This may be achieved by optimizing the sensor parameter P1 of the de-calibrated sensor node S1 by utilizing a deviation measure, which quantifies the difference between the measurement data of the calibrated neighbored sensor nodes and estimated measurement data for the de-calibrated sensor at the location of the calibrated sensor nodes. Thereby, the calibration component varies the parameter of de-calibrated sensor node S1. For each considered parameter value, the estimated measurement data of the de-calibrated sensor node at the locations of its two neighbors S2, S4 is compared with the actual measurement data of the calibrated neighbors. If a parameter is found that minimizes the deviation between the de-calibrated sensor node and its neighbors, the optimization is terminated.

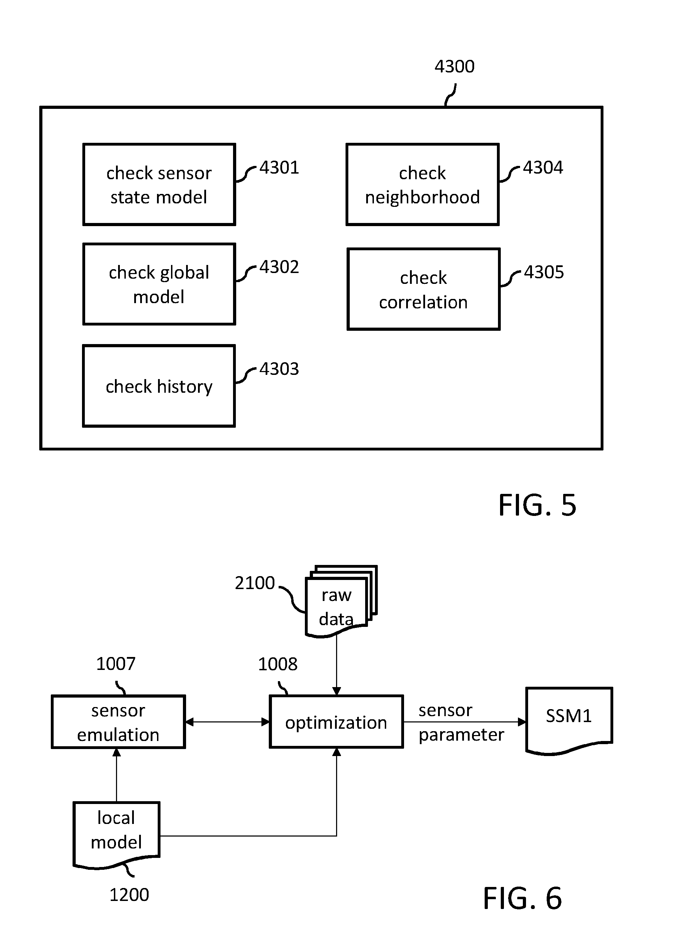

In other words, the calibration component may emulate the de-calibrated sensor node S1 at the locations of the neighboring sensor nodes S2, S4. That is, the measurement data of the de-calibrated sensor node S1 is now emulated by varying the parameter (e.g., the drift parameter P1) of the de-calibrated sensor node S1 at the location of the calibrated sensor nodes S2, S4. This allows to iteratively adjust the parameter. Details are described under FIG. 6. The optimized sensor parameter can finally be provided to update the associated sensor state model SSM1 of the de-calibrated sensor node S1.

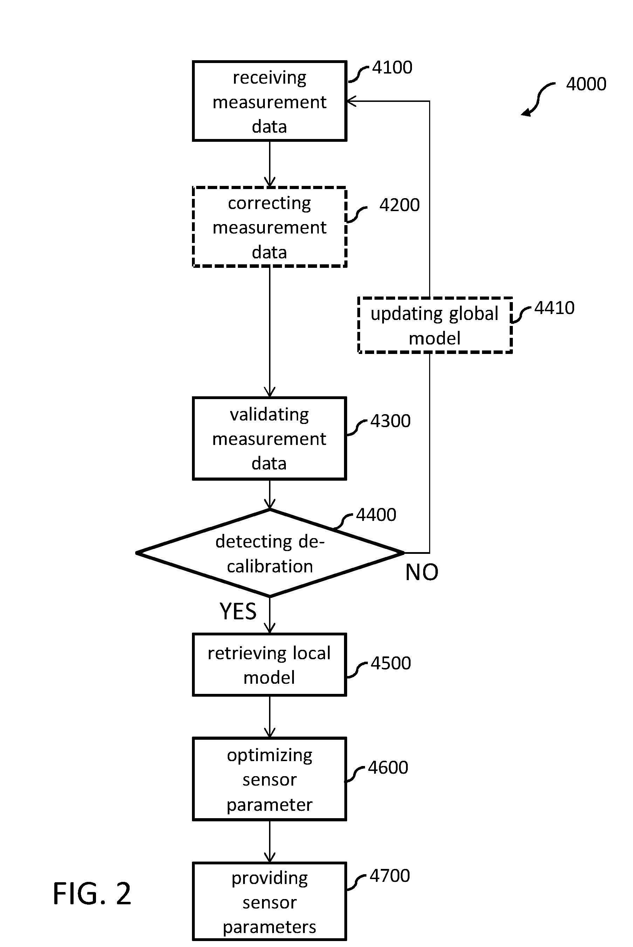

FIG. 2 is a simplified flow chart of a computer implemented method 4000 for sensor calibration support according to one embodiment of the invention. The method includes: receiving 4100 measurement data 2100 from at least one sensor node S1 out of a plurality of sensor nodes S1, S2, S3, S4; correcting 4200 the received measurement data 2100 from the at least one sensor node S1 by using an associated sensor state model SSM1 being associated with the at least one sensor node S1, wherein the associated sensor state model SSM1 is based on at least one sensor parameter of the associated at least one sensor node S1; validating 4300 the corrected measurement data against the associated sensor state model SSM1 and a global model 1100, wherein the global model 1100 has knowledge about spatio-temporal phenomena observed by the plurality of sensor nodes S1, S2, S3, S4; detecting 4400 a de-calibration of the at least one sensor node S1 based on the measurement data validation 4200; retrieving 4500 from the global model 1100 a local model 1200 for the at least one de-calibrated sensor node S1, wherein the local model 1200 is a spatio-temporal snapshot of the global model 1100; optimizing 4600 at least one sensor parameter of the at least one de-calibrated sensor node S1 by comparing the at least one de-calibrated sensor node S1 to at least one calibrated neighboring sensor node S2, S4 from the local model 1200; and providing 4700 the at least one optimized sensor parameter to update the at least one sensor state model SSM1 associated with the at least one de-calibrated sensor node S1. Optionally, the global model 1100 is updated 4410 with the corrected and validated measurement data.

Receiving 4100 measurement data 2100 from at least one sensor node S1 out of a plurality of sensor nodes S1, S2, S3, S4 means that the computer system 1000 (cf. FIG. 1) receives raw data or corrected data produced by the various sensors being connected to the computer system. The computer system may request such data from the sensor nodes to fulfill certain sensing tasks. Sensing tasks maybe set up to observe certain phenomena like the concentration of air pollutants, like Carbon Monoxide (CO), Carbon Dioxide ($CO_2$) Nitrogen Dioxide ($NO_2$) etc., for example at major intersections in a city. The sensor nodes may be organised in one or more sensor networks and communicate with the computer system through gateways or the respective networks. The computer system may receive the measurement data from the sensor nodes regularly at a given frequency set by a measurement application. The computer system may also actively request specific measurement data from a specific sensor node and receive the measurement data in response to this request. The sensor nodes may also push their measurement data to the computer system (e.g., for constantly updating the global model).

The following example will be used to illustrate the method 4000. Three sensor nodes S1, S2, S4 (cf. FIG. 1) perform a $CO_2$ measurement at their locations and send the measurement data to the computer system through the gateway node S2. The sensor node S1 is de-calibrated due to a spontaneous event like, for example, a movement from warm environment into cold environment which affects the measurement process of the sensor. The measurement data are then received by the interface component 1001 (cf. FIG. 1) of the computer system.

In one embodiment the received raw measurement data of each sensor is then corrected 4200 by the correction component 1002 (cf. FIG. 1). In the alternative embodiment correction may be performed at the sensor nodes and the computer system already receives corrected measurement data and the correcting step can be left out. This optional character of the correcting step is illustrated by the dashed frame in FIG. 2. The correction is performed using the associated sensor state models being associated with respective sensor nodes S1. Associated sensor state models may also be received by the interface component in case each sensor stores its own sensor state model. In another embodiment associated sensor state models are maintained by the computer system. For example, they can be stored in the storage component 1003 (cf. FIG. 1). As detailed under FIG. 4, an associated sensor state model is based on at least one sensor parameter of the associated sensor node. Assuming that the sensor parameter corresponds to a drift of the respective sensor node, the corrected measurement data of each sensor node can be calculated by using a linear model. For example, each sensor S1, S2, S4 may have its own specific drift behavior. Further, each sensor node may have been re-calibrated at a different point in time in the past. For each sensor node the associated sensor state model can now be used to apply a linear transformation on the measured raw data by adding a correction value, which corresponds to a drift rate multiplied by the elapsed time interval since the last re-calibration of the respective sensor node . However, this correction is not able to correct the measurement data received from the sensor node S1 because the de-calibration due to the spontaneous change in the sensor environment from warm to cold is not captured by the linear (or any other predefined functional) behavior of the associated sensor state model SSM1.

The detection component 1004 (cf. FIG. 1) can now validate 4300 the corrected measurement data against the associated sensor state models SSM1, SSM2, SSM4 and the global model 1200. The global model represents the current knowledge of the computer system about the observed phenomenon over a large-scale area, for example a city. The global model can be built up from measurement data acquired by the sensor nodes over time but may also include the integration of external data sources, such as satellite data. For example, in case of measuring environmental parameters, these external sources can provide additional global climate and environment information like wind direction wind speed, pressure, or humidity. In general, the global model 1100 has detailed knowledge about the observed spatio-temporal phenomenon. A detailed example of the global model is given under FIG. 3. The corrected measurement data of the de-calibrated sensor S1 is now compared to an expected value range given by the global model for the received measurement data of the observed phenomenon at the location of the sensor node S1. In the example, the comparison leads to significant deviation of the corrected measurement data 2101 of the de-calibrated sensor node S1, whereas for the well calibrated sensor nodes S2, S4 the corrected measurement data 2102, 2104 fall well into the predicted value range of the global model at the respective sensor locations. The associated sensor state model SSM1 cannot explain the deviation either as the erroneous measurement data results from a spontaneous and thus unpredictable event at the location of the respective sensor node S1. In order to differentiate de-calibration from a false alarm, which for example may result from false usage of the sensor node S1, the detection component may compare the corrected measurement data of the other well calibrated sensor nodes S2, S4 in close neighborhood of the de-calibrated sensor node S1 with the corrected measurement data of the de-calibrated sensor node. In the example, this comparison also shows a significant deviation from the measurement data of the calibrated sensor nodes where, at the same time, the calibrated sensor nodes do not show a corresponding step in their measurement. This indicates that sensor node S1 is de-calibrated and that the received measurement data is unreliable. As a consequence the detection component is detecting 4400 a de-calibration of the sensor node S1 based on the measurement data validation 4200. Optionally, the detection component can now forward the corrected measurement data from the well calibrated sensor nodes S2, S4 to the global model 1100, which may be updated 4410 with the corrected measurement data. This improves the reliability of the predicted value ranges given by the global model for future data validations of measurement data.

As a consequence of the detection of the de-calibration of sensor node S1 the detection component invokes the retrieval component of the computer system to retrieve 4500 a local model 1200 (cf. FIG. 1) for the de-calibrated sensor node S1 from the global model. In the example, the local model is a spatio-temporal snapshot of the global model capturing only a spatial area around sensor node S1 and its neighbors S2, S3, S4. A detailed example is given under FIG. 3. As the local model is a snapshot of the global model it is not changed over time and may live only for this specific re-calibration of sensor node S1. After the re-calibration it may be deleted.

In the example, the local model is then used by the calibration component 1006 (cf. FIG. 1) for optimizing the sensor drift parameter of the de-calibrated sensor node S1 by comparing the de-calibrated sensor node S1 to the calibrated neighboring sensor nodes S2, S4 from the local model. For this purpose the calibration component varies the drift parameter values of sensor node S1. For each considered drift parameter value emulated measurement data is calculated for the de-calibrated sensor S1 at the locations of the two calibrated neighboring sensor nodes S2, S4. For example, the local model may provide a prediction z of the measurement data at location 2102 (cf. FIG. 3) of the calibrated sensor node S2. The prediction can then be calculated as

$$z \; = \; y \; + \; x \; + \; v \, ,$$

where $y$ is the expected phenomenon value at the sensor location 2102 according to the local model, $x$ is the drift parameter to be varied and $v$ is the sensor noise. The emulated measurement data of sensor node S1 at the locations of the calibrated sensor nodes is then compared with the actual measurement data of the calibrated sensor nodes S2, S4. If a drift parameter is found that minimizes the measurement data deviation between sensor node S1 and the calibrated sensor nodes S2, S4, the optimization is terminated. For minimization, numerical optimization algorithms like gradient descent or the Newton method can be used.

Once the optimized sensor parameter is found it is used to update the sensor state model SSM1 associated with the de-calibrated sensor node S1. In case the sensor state model is stored at the sensor node S1, the computer system can send the optimized parameter directly to the sensor node through the interface component or through the respective sensor network gateway node S2. If the sensor state models are maintained by the computer system the calibration component may send the parameter value directly to the data storage component.

FIG. 3 illustrates an example of a global model 1100. The global model provides a continuous description of a phenomenon (e.g., Carbon Monoxide (CO), Carbon Dioxide ($CO_2$) Nitrogen Dioxide ($NO_2$)) which can be based on physical conditions or an estimation based on historic corrected measurement data of sensor nodes measuring the phenomenon. For example, the global model can be a mathematical model that describes the spatio-temporal behavior of phenomena such as diffusion, advection, chemical reactions between gases, geographical circumstances, or environmental effect like wind or temperature. A typical example of such a mathematical model is a chemical transportation model, which is a specific type of partial differential equation. For reasons of simplicity, only one location dimension is shown. A real global model would typically include at least two location dimensions to show the phenomenon for example for a two dimensional area. However, even a three dimensional location model can be used and, as indicated by the dashed arrow, the model may even reflect changes over time by taking into account the time dimension. The global model may integrate information from of external data sources, such as satellite data on wind direction, temperature, pressure or humidity. Also data from other stationary measurement stations can be included (e.g. highly accurate temperature, CO2, dust, or SO2 measurements - typically not mobile and usually sparse in terms of spatial distribution).

In the example of FIG. 3, measurement data are captured at locations corresponding to the measured data values 2101 to 2105 (shown as black bullets). The measured data values in the global model may be average values of all received measurement data of a respective sensor node at the respective location. The data values may also be calculated as weighted averages or by any other appropriate statistical function. In general, the data values in the global model can be all received measurement data, a subset of the received measurement data (e.g. if measurement selection or sparsification is performed) or result from spatial and/or temporal fusion like averaging or filtering. It is assumed that the measured data values 2101 to 2104 originate from the sensor nodes S1 to S4 (cf. FIG. 1). The sensor nodes for the other measured data values are not shown in FIG. 1. The interpolation 1110 between the various measured data values can be calculated for example by using Gaussian Process Regression (Kriging), Markov Random Fields, Space-Time Kalman Filtering, Bayesian Maximum Entropy or any other appropriate mathematical method for interpolation of the measured data values leading to a continuous description with statistical uncertainty information. This process allows the calculation of a confidence interval for each location point in the global model, which is illustrated by the dashed lines 1120, 1130.

For Gaussian Process (GP) regression, it is assumed that a set of data points $D = \{(x_1,y_1),(x_2,y_2), ..., (x_n,y_n)\}$ is drawn from the noisy process model

$$y_i = h(x_i) + \epsilon ,$$

where $x_i$ are the sensor node locations, $y_i$ are the measurement data values, and $\epsilon \sim N(0, \sigma^2)$ is zero-mean Gaussian noise with variance $\sigma^2$. For brevity reasons, $X = [x_1,..., x_n]'$ are all locations and $y = [y_i, ..., y_n]'$ are the corresponding measurement data values in the following. The GP is used to infer the latent function $h(.)$, which corresponds to the observed phenomenon, from the data D and is completely specified by a mean function $m(.)$ and a positive semi-definite covariance function $k(.,.)$, also called a kernel. An example of $m(.)$ and $k(.,.)$, are a zero mean function and the squared exponential (SE) kernel model

$$k(x, x0) = \alpha^2 \cdot \exp\left\{-\frac{1}{2}(x - x')'\Lambda^{-1}(x - x')\right\} ,$$

where A is a diagonal matrix of the characteristic length-scales for each location dimension and $\alpha^2$ is the variance of the latent function $h$. The posterior distribution of the function value $h_* = h(x_*)$ for an arbitrary sensor location $x_*$ is Gaussian with mean

$$h(x_*) = E\{h_*\} = k_*'(\mathbf{K} + \sigma^2 \mathbf{I})^{-1}y ,$$

and variance

$$\sigma^2(x_*) = var\{h_*\} = k_{**} - k_*'(\mathbf{K} + \sigma^2\mathbf{I})^{-1}k_* ,$$

with $E\{.\}$ being the expectation value, $var\{.\}$ being the variance, $k_* := k(X, x_*)$, $k_{**} := k(x_*, x_*)$, and K being the kernel matrix with elements $K_{ij} = k(x_i, x_j)$. Note that the variance depends on the noise $\epsilon$ as well as on the correlation between sensor location and data $D$. The mean and variance can be used to calculate the confidence interval $(l, u)$ with

$$l = h(x_*) - c \cdot \sigma(x_*) ,$$

$$u = h(x_*) + c \cdot \sigma(x_*),$$

where $c$ is a positive constant (leading to the $c$-sigma interval). Typically c is chosen to be an integer of 3 and higher. In case of multiple phenomena, similarly the covariance matrix

$$\Sigma = \begin{bmatrix} \sigma_1^2 & \cdots & \text{cov}_{1m} \\ \vdots & \ddots & \vdots \\ \text{cov}_{m1} & \cdots & \sigma_m^2 \end{bmatrix}$$

at t a location $x$ can be calculated, where the diagonal elements $\sigma_i^2$ correspond to the variance of each phenomenon type $i = 1, ..., m$ and the off-diagonal elements $cav_{ij}$ correspond to the cross-variances between phenomenon $i$ and $j$. The covariance matrix allows calculating the Pearson's correlation coefficient between phenomenon $i$ and $j$ according to

$$\rho_{ij} = \frac{cov_{ij}}{\sigma_i^2 \, \sigma_j^2}.$$

Thereby, the confidence interval in the global model for each location corresponds to a probabilistic estimate of the reliability of the global model at the respective location. For example, in the case of using Gaussian Process Regression, the Gaussian Process provides at each location for each point in time a normal distribution, wherein the variance of the normal distribution corresponds to the uncertainty of the estimate at the respective point. Based on the variance the confidence interval can be calculated (e.g., three-sigma interval). For example, in the case of using Markov Random Fields a grid is spanned over the observation area. Each grid point is a random variable that is statistically dependent on its grid neighbors. If a Gaussian Markov Random Field is considered for instance, then the random variables are Gaussian. Linear or quadratic interpolation can be used to estimate the phenomenon between grid points.

That is, for example, at the location L1 of the measured data value 2101 (sensor node S1) the predicted measurement data of sensor node S1 is within the upper and lower boundaries given by the respective confidence interval CI1. Typically, the confidence intervals are relatively smaller close to and at locations, where measurement data is received from sensor nodes, compared to locations that are far away such sensor nodes. Thus, the estimate of the spatio-temporal phenomena strongly relies on the interpolation capabilities of the global model. A small confidence interval indicates a high reliability of the global model in terms of the quality of the expected measurement data.

If for example a new sensor node S3 is deployed in the sensor network 2000 (cf. FIG. 1), at the location L3, the respective uncertainty or confidence interval for the measurement capability of S3 in the global model 1100 may initially be relatively large compared to the locations where sensor nodes already provided measurement data in the past, which indicates a low reliability of the model at location L3. The location L3 of the newly deployed sensor may be determined for example via a global positioning system (GPS, Galileo) and the determined coordinates are registered in the global model accordingly. Any other appropriate method for determining the location of the new sensor may be used as well. When the computer system starts to receive measurement data 2003 from the new sensor node S3, the measurement data can be used to update the global model resulting in a corresponding shrinking uncertainty or confidence interval at location L3 over time increasing the reliability of the global model. Of course the global model is only updated with the measurement data 2003 if they do not result in a de-calibration detection of S3.

In the example, measurement data 2101' received from sensor node S1 at location L1 do not fall anymore into the value range of the corresponding confidence interval CI1, which is predicted by the global model. If the deviation cannot be explained by the associated sensor state model SSM1 and/or by a comparison with other measurement data from calibrated sensor nodes (e.g., S2, S4) a de-calibration of the respective sensor node S1 is detected.

The global model may also be used to allow determining correlation information. For example, a sensor node may be able to measure two different phenomena (e.g., $CO_2$ and ozone). It can occur that only the $CO_2$ part of the sensor node is de-calibrated while the ozone part is still working well. As explained before, validation does not need to take into account only the sensor state models and the global model. It can also take into account measurement data of neighboring sensor nodes. If a sensor node supports different types of measurement data (e.g., $CO_2$ and ozone) it may occur that, for example, the $CO_2$ part is de-calibrated whereas the ozone part is still well calibrated. If there is a strong correlation between the concentration of $CO_2$ and ozone in the global model and the sensor node provides unexpected measurement data only for the $CO_2$ measurement type, which cannot be explained from the known correlation with the ozone measurement type, this may be an indication that the sensor node is de-calibrated for the $CO_2$ measurement type. Such correlation information may be a static part of the global model, which is stored a priori or it may be dynamically calculated by the global model, which could also consider correlation changes over time (see calculation of Pearson's correlation coefficient above.)

FIG. 4 illustrates an example of a sensor state model SSM1. The sensor state model SSM1 describes the temporal evolution of a sensor parameter. The figure shows two alternative embodiments of SSM1 - one example of a linear sensor temporal evolution of a sensor parameter P1 (solid line) and another example of a non-linear temporal evolution of a further sensor parameter P2 (dashed line). In the example of a multi-sensor node having two integrated physical sensors, both embodiments can be associated with the same sensor node for the respective physical sensor or phenomenon.

For example, the linear temporal evolution may be used to provide a drift rate for estimating the sensor drift over time. Such a drift rate can be identified prior to the deployment of the respective sensor node S1. By means of the sensor state model SSM1, the current status of the respective sensor parameter can then be estimated based on the drift rate via the linear model

$$x_{k+1} = x_k + t \cdot \Delta x + w ,$$

which provides the estimate of the drift $x$ at time step $k + 1$ based on the current estimate $x_k$ ,the drift rate $\Delta x$ multiplied with the time interval length $t$ between time step $k$ and $k + 1$, and some zero-mean noise $w$. At time step $k = 0$, which is the time of deployment, the drift $x$ is zero, i.e., initially a calibrated sensor is assumed.

Besides these estimates, the sensor state model SSM 1 may also provide further information about the correctness of the measurement data provided by the sensor node S1. For example, if the sensor node itself provides self-testing procedures, results from these procedures may be stored in the sensor state model as well. For example, using temperature, pressure, and/or humidity measurements allows calculating calibration parameters for gas sensors. An example for estimating the uncertainty of the correction is taking into account that there is some noise in the drift of the respective parameter (e.g., P1). That is, over time the reliability of the correction decreases because of the noise. For example, noise can be modeled as a Gaussian normal distribution. Thresholds may be used to estimate the reliability of the data correction. For example, a threshold can be defined as a maximum time interval, which has elapsed since the last calibration of the respective sensor. An alternative embodiment of such a threshold can be applied to the variance of the calibration parameter $x$. Due to the noise w added at each time step to the parameter $x$, the variance of $x$ increases with the time. The noise is illustrated by the dashed lines w1, w2.

FIG. 5 shows alternative embodiments for validating 4300 measurement data. As explained before the detection component 1004 (cf. FIG. 1) examines the corrected measurement data before the data may be fused into the global model. Thereby, the validating 4300 can be composed of a plurality of check procedures which are now explained in more detail.

For validating the measurement data the detection component may perform a Check Sensor State Model 4301 procedure. For example, as explained under FIG. 4., it may use estimates of the drift of sensor measurement data over time and further information revealing the degree of de-calibration in order to decide whether the sensor node under investigation may be de-calibrated or not. The further information may originate for example from self-tests performed by the respective sensor node.

The detection component may further perform a Check Global Model 4302 procedure. This has already been discussed in detail under FIG. 3. The global model can be used to validate the corrected measurement data of the sensor nodes. For this purpose, it is checked whether the corrected measurement data is within a confidence interval (e.g., c-sigma interval) of the estimate provided by the global model. During this check, spatio-temporal correlation can be automatically exploited as it is a part of the global model as described by the Gaussian Process example earlier.

The detection component may further perform a Check History 4303 procedure. For this purpose the detection component can monitor (e.g., by storing the last calibration time) if the sensor node under investigation has recently been re-calibrated. This may support the decision whether there is an unexpected event in the close vicinity of the respective sensor node or if the sensor node is actually de-calibrated. The probability that a sensor node which is re-calibrated in short time intervals provides measurement data related to an unexpected event may be higher than the probability the sensor node is de-calibrated. On the other hand, this assumption may not be valid for a sensor node where the last re-calibration occurred a relatively long time ago.

The detection component may further perform a Check Neighborhood 4304 procedure. If for example a sensor node provides measurement data not fitting to the current phenomena estimate provided by the global model, there can be different reasons for this effect: the sensor node may be de-calibrated or there may be an unexpected event going on at the location of the sensor node. If the sensor node is not de-calibrated, then the measurement data provided by sensor nodes in close vicinity of the sensor node under investigation should show a similar measurement behavior as the sensor node under investigation. The Check Neighborhood 4304 procedure can be used to mimic the behavior or measurement data of the potentially de-calibrated sensor node at locations of its neighboring nodes. Therefore, the estimates of the spatio-temporal phenomenon at the locations of the neighboring sensor nodes are provided by the global model. In addition, the measurements from neighboring nodes can also be requested on demand as, advantageously, the global model has the up-to-date measurement data of all sensor nodes. It is then checked whether the global model or the measurement data of neighboring sensor nodes can explain the measurement data of the potentially de-calibrated sensor node

The detection component may further perform a Check Correlation 4305 procedure: Several types of phenomena can be observed simultaneously by using different measurement types. There may exist spatial and temporal correlations between the measurement data related to the different measurement types. This correlation information can be used to check whether a strong deviation of measurement data provide by a sensor node for one measurement type can be explained by the behavior/measurement data of another measurement type. The correlation information is provided by the global model (e.g, by using a Gaussian Process as explained earlier).

FIG. 6 shows an embodiment of the calibration component 1006 (cf. FIG. 1). The calibration component 1006 may include a sensor emulation component 1007 and an optimization component 1008.

The sensor emulation component 1007 can work similar to the check neighborhood procedure of the detection component explained under FIG. 5 and is used to mimic the behavior/measurement data of a de-calibrated sensor node at locations of its well calibrated neighboring sensor nodes.

The optimization component 1008 can utilize a deviation measure, which quantifies the difference between the measurement data of the well calibrated neighbor nodes and the emulated measurement data provided by the sensor emulation component 1007. Based on the deviation measure, a sensor parameter of the de-calibrated sensor node can be adapted such that the deviation is minimized. The optimized sensor parameters are then sent to the associated sensor state model of the de-calibrated sensor node.

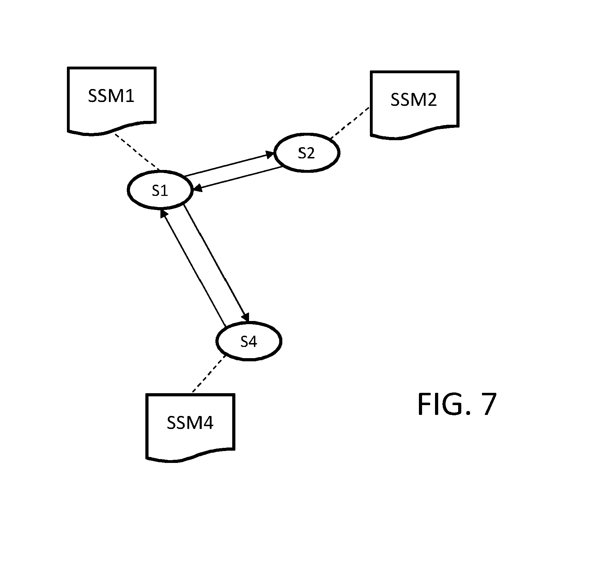

FIG. 7 shows a specific example of parameter optimization for the de-calibrated sensor node S1. To determine the sensor parameter x of node S1, the goal is to solve a optimization problem like the following

$$x^* = \arg \min_{\mathrm{x}} \left\{ E \left\{ \sum_{i=\{2,4\}} \left( \hat{z}_i - z_i(x) \right)^2 \right\} \right\}$$

where $\hat{z}_i$ is the current measurement of sensor node Si and $z_i(x)$ is the predicted measurement of sensor node S1 at the location of sensor node Si (e.g., S2, S4). The predicted measurement depends on the sensor parameter x and the estimated phenomenon at the location of sensor Si according to the local model. Other deviation measures can be used instead of the quadratic deviation measure in the above example. For minimization, techniques from numerical optimization like gradient descent can be used. Depending on the used deviation measure and global model, the optimization problem could even be solved in closed form.

Embodiments of the invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device, for execution by, or to control the operation of, data processing apparatus, e.g., a programmable processor, a computer, or multiple computers. A computer program, such as the computer program of claim 10, can be written in any form of programming language, including compiled or interpreted languages, and it can be deployed in any form, including as a standalone program or as a module, component, subroutine, or other unit suitable for use in a computing environment. A computer program can be deployed to be executed on one computer or on multiple computers at one site or distributed across multiple sites and interconnected by a communication network. The method described under FIG. 2 can all be executed by corresponding computer products on the respective devices, e.g., the non-trusted server, data producer client computers and the data consumer client computers.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Such storage devices may also provisioned on demand and be accessible through the Internet (Cloud Computing). Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a cathode ray tube (CRT) or liquid crystal display (LCD) monitor, for displaying information to the user and an input device such as a keyboard, touchscreen or touchpad, a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. Client computers can also be mobile devices, such as smartphones, tablet PCs or any other handheld computing device. The components of the system can be interconnected by any form or medium of digital data communication, e.g., a communication network. Examples of communication networks include a local area network (LAN) and a wide area network (WAN), e.g., the Internet or wireless LAN or telecommunication networks.

The computing system can include clients and servers. A client and server are generally remote from each other and typically interact through a communication network. The relationship of client and server arises by virtue of computer programs running on the respective computers and having a client-server relationship to each other.

**Claims**

1. A computer implemented method (4000) for sensor calibration support comprising:

   receiving (4100) measurement data (2100) from at least one sensor node (S1) out of a plurality of sensor nodes (S1, S2, S3, S4);
   validating (4300) the measurement data against an associated sensor state model (SSM1) and a global model (1100), wherein the global model (1100) has knowledge about spatio-temporal phenomena observed by the plurality of sensor nodes (S1, S2, S3, S4), and wherein the associated sensor state model (SSM1) is associated with the at least one sensor node (S1) and the associated sensor state model (SSM1) is based on at least one sensor parameter of the associated at least one sensor node (S1);
   detecting (4400) a de-calibration of the at least one sensor node (S1) based on the measurement data validation (4200);
   retrieving (4500) from the global model (1100) a local model (1200) for the at least one de-calibrated sensor node (S1), wherein the local model (1200) is a spatio-temporal snapshot of the global model (1100);
   optimizing (4600) at least one sensor parameter of the at least one de-calibrated sensor node (S1) by comparing the at least one de-calibrated sensor node (S1) to at least one calibrated neighboring sensor node (S2, S4) from the local model (1200); and
   providing (4700) the at least one optimized sensor parameter to update the at least one sensor state model (SSM1) associated with the at least one de-calibrated sensor node (S1).

2. The computer implemented method (4000) of claim 1, further comprising:

   correcting (4200) the received measurement data (2100) from the at least one sensor node (S1) by using the associated sensor state model (SSM1) upon receiving (4100).

3. The computer implemented method (4000) of claim 1 or 2, further comprising:

updating (4410) the global model (1100) with the corrected measurement data.

4. The computer implemented method (4000) of anyone of the previous claims, wherein validating (4300) further comprises:

   requesting further measurement data from calibrated sensor nodes (S2, S4) in the neighborhood of the at least one de-calibrated sensor node (S1).

5. The computer implemented method (4000) of anyone of the previous claims, wherein the sensor state model (SSM 1) is based on a drift rate for estimating sensor drift over time for the associated at least one sensor node (S1).

6. The computer implemented method (4000) of anyone of the previous claims, wherein the sensor state model (SSM1) provides further information about measurement data correctness of the associated at least one sensor node (S1).

7. The computer implemented method (4000) of anyone of the previous claims, wherein the global model (1100) is selected from anyone of the following model types: Gaussian Process Regression, Markov Random Fields, Space-Time Kalman Filtering, or Bayesian Maximum Entropy Model.

8. The computer implemented method (4000) of anyone of the previous claims, wherein the global model (1100) is configured to perform correlation analysis for measurement data having different measurement types.

9. The computer implemented method (4000) of anyone of the previous claims, wherein the local model (1200) comprises a current estimate of observed spatio-temporal phenomena in a neighborhood of the at least one detected de-calibrated sensor node (S1).

10. The computer implemented method (4000) of anyone of the previous claims, wherein validating (4300) comprises anyone of the following checking procedures:

    checking sensor state model (4301) for comparing the corrected measurement data with a predicted threshold value of the associated sensor state model (SSM1);
    checking global model (4302) for comparing the corrected measurement data with threshold values (1120, 1130) of a corresponding confidence interval (CI1);
    checking history (4303) for monitoring calibration history of the at least one sensor node (S1);
    checking neighborhood (4304) for comparing the corrected measurement data of the at least one sensor node (S1) with the corrected measurement data of neighboring sensor nodes (S2, S4); or
    checking correlation (4305) for determining correlations between measurement data related to different measurement types.

11. A computer program product that when loaded into a memory of a computing device and executed by at least one processor of the computing device executes the steps of the computer implemented method according to of anyone of the claims 1 to 10.

12. A computer system (1000) comprising:

    an interface component (1001) configured to receive measurement data (2100) from a plurality of sensor nodes (S1, S2, S3, S4);
    a data storage component (1003) storing a global model (1100), the global model (1100) having knowledge about spatio-temporal phenomena observed by the plurality of sensor nodes (S1, S2, S3, S4);
    a detection component (1004) configured to detect a de-calibration of at least one sensor node (S1) by using information from the global model (1100), at least one sensor state model (SSM1) being associated with the at least one sensor node (S1) and measurement data (2101) originating from the at least one sensor node (S1);
    a retrieval component (1005) configured to retrieve a local model (1200) for the at least one sensor node (S1) in case that the de-calibration is detected, wherein the local model (1200) is a spatio-temporal snapshot of the global model (1100); and
    a calibration component (1006) configured to use data from available calibrated sensor nodes (S2, S4) in the local model for optimizing at least one sensor parameter of the at least one de-calibrated sensor (S1) and to provide the at least one optimized sensor parameter to update the at least one sensor state model (SSM1) associated with the at least one de-calibrated sensor node (S1).

**13.** The computer system (1000) of claim 12, wherein the retrieval component (1005) is configured to query calibrated sensor nodes (S2, S4) in the neighborhood of the at least one de-calibrated sensor node (S1) for current measurement data.

**14.** The computer system (1000) of anyone of the claims 12 to 13, wherein the data storage component (1003) is further configured to update the global model (1100) on the basis of corrected measurement data from calibrated sensor nodes (S2, S4) to reflect ongoing spatio-temporal variations.

**15.** The computer system (1000) of anyone of the claim 12 to 14, wherein the calibration component (1006) is configured to utilize a deviation measure for quantifying a difference between the at least one de-calibrated sensor node (S1) and at least one calibrated neighboring sensor node (S2, S4) from the local model (1200).

**16.** The computer system (1000) of anyone of the claim 12 to 15 further comprising:

a correction component (1002) configured to correct the measurement data (2100) received from the plurality of sensor nodes (S1, S2, S3, S4) by using associated sensor state models (SSM1, SSM2, SSM3, SSM4).

**Amended claims in accordance with Rule 137(2) EPC.**

**1.** A computer implemented method (4000) for sensor calibration support comprising:

receiving (4100) measurement data (2100) from at least one sensor node (S1) out of a plurality of sensor nodes (S1, S2, S3, S4);
validating (4300) the measurement data against an associated sensor state model (SSM1) and a global model (1100), wherein the global model (1100) is built up from measurement data acquired by the plurality of sensor nodes over time and has knowledge about spatio-temporal phenomena observed by the plurality of sensor nodes (S1, S2, S3, S4), and wherein the associated sensor state model (SSM1) is associated with the at least one sensor node (S1) for a respective sensing capability of the at least one sensor node and the associated sensor state model (SSM1) is based on at least one sensor parameter of the associated at least one sensor node (S1);
detecting (4400) a de-calibration of the at least one sensor node (S1) based on the measurement data validation (4300);
retrieving (4500) from the global model (1100) a local model (1200) for the at least one de-calibrated sensor node (S1), wherein the local model (1200) is a spatio-temporal snapshot of the global model (1100);
optimizing (4600) the at least one sensor parameter of the at least one de-calibrated sensor node (S1) by comparing the at least one de-calibrated sensor node (S1) to at least one calibrated neighboring sensor node (S2, S4) from the local model (1200); and
providing (4700) the at least one optimized sensor parameter to update the at least one sensor state model (SSM1) associated with the at least one de-calibrated sensor node (S1).

**2.** The computer implemented method (4000) of claim 1, further comprising:

correcting (4200) the received measurement data (2100) from the at least one sensor node (S1) by using the associated sensor state model (SSM1) upon receiving (4100).

**3.** The computer implemented method (4000) of claim 1 or 2, further comprising:

updating (4410) the global model (1100) with the corrected measurement data.

**4.** The computer implemented method (4000) of anyone of the previous claims, wherein validating (4300) further comprises:

requesting further measurement data from calibrated sensor nodes (S2, S4) in the neighborhood of the at least one de-calibrated sensor node (S1).

**5.** The computer implemented method (4000) of anyone of the previous claims, wherein the sensor state model (SSM1) is based on a drift rate for estimating sensor drift over time for the associated at least one sensor node (S1).

**6.** The computer implemented method (4000) of anyone of the previous claims, wherein the sensor state model (SSM1) provides further information about measurement data correctness of the associated at least one sensor node (S1).

**7.** The computer implemented method (4000) of anyone of the previous claims, wherein the global model (1100) is selected from anyone of the following model types: Gaussian Process Regression, Markov Random Fields, Space-Time Kalman Filtering, or Bayesian Maximum Entropy Model.

**8.** The computer implemented method (4000) of anyone of the previous claims, wherein the global model (1100) is configured to perform correlation analysis for measurement data having different measurement types.

**9.** The computer implemented method (4000) of anyone of the previous claims, wherein the local model (1200) comprises a current estimate of observed spatio-temporal phenomena in a neighborhood of the at least one detected de-calibrated sensor node (S1).

**10.** The computer implemented method (4000) of anyone of the previous claims, wherein validating (4300) comprises anyone of the following checking procedures:

checking sensor state model (4301) for comparing the corrected measurement data with a predicted threshold value of the associated sensor state model (SSM1);
checking global model (4302) for comparing the corrected measurement data with threshold values (1120, 1130) of a corresponding confidence interval (CI1);
checking history (4303) for monitoring calibration history of the at least one sensor node (S1);
checking neighborhood (4304) for comparing the corrected measurement data of the at least one sensor node (S1) with the corrected measurement data of neighboring sensor nodes (S2, S4); or
checking correlation (4305) for determining correlations between measurement data related to different measurement types.

**11.** A computer program product that when loaded into a memory of a computing device and executed by at least one processor of the computing device executes the steps of the computer implemented method according to anyone of the claims 1 to 10.

**12.** A computer system (1000) comprising:

an interface component (1001) configured to receive measurement data (2100) from a plurality of sensor nodes (S1, S2, S3, S4);
a data storage component (1003) storing a global model (1100), the global model (1100) being built up from measurement data acquired by the plurality of sensor nodes over time and having knowledge about spatio-temporal phenomena observed by the plurality of sensor nodes (S1, S2, S3, S4);
a detection component (1004) configured to detect a de-calibration of at least one sensor node (S1) by using information from the global model (1100), at least one sensor state model (SSM1) being associated with the at least one sensor node (S1) for a respective sensing capability of the at least one sensor node and measurement data (2101) originating from the at least one sensor node (S1);
a retrieval component (1005) configured to retrieve a local model (1200) for the at least one sensor node (S1) in case that the de-calibration is detected, wherein the local model (1200) is a spatio-temporal snapshot of the global model (1100); and
a calibration component (1006) configured to use data from available calibrated sensor nodes (S2, S4) in the local model for optimizing at least one sensor parameter of the at least one de-calibrated sensor (S1) and to provide the at least one optimized sensor parameter to update the at least one sensor state model (SSM1) associated with the at least one de-calibrated sensor node (S1).

**13.** The computer system (1000) of claim 12, wherein the retrieval component (1005) is configured to query calibrated sensor nodes (S2, S4) in the neighborhood of the at least one de-calibrated sensor node (S1) for current measurement data.

**14.** The computer system (1000) of anyone of the claims 12 to 13, wherein the data storage component (1003) is further configured to update the global model (1100) on the basis of corrected measurement data from calibrated sensor nodes (S2, S4) to reflect ongoing spatio-temporal variations.

**15.** The computer system (1000) of anyone of the claim 12 to 14, wherein the calibration component (1006) is configured to utilize a deviation measure for quantifying a difference between the at least one de-calibrated sensor node (S1) and at least one calibrated neighboring sensor node (S2, S4) from the local model (1200).

**16.** The computer system (1000) of anyone of the claim 12 to 15 further comprising:

a correction component (1002) configured to correct the measurement data (2100) received from the plurality of sensor nodes (S1, S2, S3, S4) by using associated sensor state models (SSM1, SSM2, SSM3, SSM4).

FIG. 1

FIG. 2

FIG. 3

FIG. 4

4300

| check sensor state model | 4301 | | check neighborhood | 4304 |
| check global model | 4302 | | check correlation | 4305 |
| check history | 4303 | | | |

## FIG. 5

2100 — raw data

1007 — sensor emulation ⟷ 1008 — optimization → sensor parameter → SSM1

local model
1200

## FIG. 6

FIG. 7

Europäisches
Patentamt

European
Patent Office

Office européen
des brevets

# EUROPEAN SEARCH REPORT

Application Number

EP 11 19 2890

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 983 666 A1 (ACCENTURE GLOBAL SERVICES GMBH [CH]) 22 October 2008 (2008-10-22)<br>* abstract *<br>* paragraph [0021] - paragraph [0030] *<br>* paragraph [0044] - paragraph [0053] *<br>----- | 1-16 | INV.<br>G06Q10/04 |
| X | EMILIANO MILUZZO ET AL: "CaliBree: A Self-calibration System for Mobile Sensor Networks",<br>DISTRIBUTED COMPUTING IN SENSOR SYSTEMS : 4TH IEEE INTERNATIONAL CONFERENCE, DCOSS 2008, SANTORINI ISLAND, GREECE, JUNE 11 - 14, 2008 ; PROCEEDINGS; [LECTURE NOTES IN COMPUTER SCIENCE], SPRINGER, BERLIN, HEIDELBERG,<br>vol. 5067, 11 June 2008 (2008-06-11), pages 314-331, XP002668228,<br>ISBN: 978-3-540-69169-3<br>* abstract *<br>* Sections 1 and 4 *<br>----- | 1-16 | |
| X | MUKHOPADHYAY S ET AL: "Model based error correction for wireless sensor networks",<br>SENSOR AND AD HOC COMMUNICATIONS AND NETWORKS, 2004. IEEE SECON 2004. 2004 FIRST ANNUAL IEEE COMMUNICATIONS SOCIETY CONFERENCE ON SANTA CLARA, CA, USA 4-7 OCT. 2004, PISCATAWAY, NJ, USA,IEEE,<br>4 October 2004 (2004-10-04), pages 575-584, XP010759635,<br>DOI: 10.1109/SAHCN.2004.1381960<br>ISBN: 978-0-7803-8796-6<br>* abstract *<br>* Sections I, II, III, IV.B *<br>----- | 1-16 | TECHNICAL FIELDS SEARCHED (IPC)<br><br>G06Q<br>F24F<br>H04B |

-/--

The present search report has been drawn up for all claims

| Place of search | Date of completion of the search | Examiner |
|---|---|---|
| The Hague | 24 April 2012 | Moltenbrey, Michael |

EPO FORM 1503 03.82 (P04C01)

Europäisches
Patentamt

European
Patent Office

Office européen
des brevets

# EUROPEAN SEARCH REPORT

Application Number

EP 11 19 2890

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FENG J ET AL: "Model-based calibration for sensor networks", PROCEEDINGS OF IEEE SENSORS 2003 (IEEE CAT. NO.03CH37498) IEEE PISCATAWAY, NJ, USA; [IEEE INTERNATIONAL CONFERENCE ON SENSORS], IEEE, vol. CONF. 2, 22 October 2003 (2003-10-22), pages 737-742VOL.2, XP010691005, DOI: 10.1109/ICSENS.2003.1279039 ISBN: 978-0-7803-8133-9 * the whole document * | 1-16 | |
| A | JESSICA FENG SANFORD ET AL: "On-line sensor calibration and error modeling using single actuator stimulus", AEROSPACE CONFERENCE, 2009 IEEE, IEEE, PISCATAWAY, NJ, USA, 7 March 2009 (2009-03-07), pages 1-11, XP031450069, ISBN: 978-1-4244-2621-8 * the whole document * | 1-16 | |

TECHNICAL FIELDS
SEARCHED    (IPC)

The present search report has been drawn up for all claims

| Place of search | Date of completion of the search | Examiner |
|---|---|---|
| The Hague | 24 April 2012 | Moltenbrey, Michael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 11 19 2890

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2012

| Patent document cited in search report | | Publication date | Patent family member(s) | | Publication date |
|---|---|---|---|---|---|
| EP 1983666 | A1 | 22-10-2008 | AT | 484894 T | 15-10-2010 |
| | | | AU | 2008237876 A1 | 23-10-2008 |
| | | | CA | 2683688 A1 | 23-10-2008 |
| | | | CN | 101669307 A | 10-03-2010 |
| | | | EP | 1983666 A1 | 22-10-2008 |
| | | | JP | 2010525306 A | 22-07-2010 |
| | | | US | 2010121602 A1 | 13-05-2010 |
| | | | WO | 2008125649 A1 | 23-10-2008 |